# EUROPEAN PATENT APPLICATION

(11) **EP 2 022 756 A2**
(43) Date of publication of application: **11.02.2009**
(21) Application number: 08160992.7
(22) Date of filing: 23.07.2008
(51) Int. Cl.: C01B 3/38

(54) **Staged Hydrocarbon Reformer**

(30) Priority: 07.08.2007 US 890643
(71) Applicant: Delphi Technologies, Inc., Troy, Michigan 48007 (US)
(72) Inventor: Fischer, Bernhard A., Rochester, NY 14618 (US)
(74) Representative: Denton, Michael John

(57) **Abstract**

A hydrocarbon reformer comprising a plurality of sequential reforming stages. The first stage has relatively low catalytic activity to minimize heat buildup in exothermic catalysis, which may be achieved by having a short residence time and/or relatively low catalytic capability, such that not all of the fuel and air passing through the first stage is catalyzed, thereby preventing thermal excess in the first stage and consequent bed erosion. Exothermic combustion near the front edge of the reformer produces water and carbon dioxide, but little hydrogen, while consuming some of the hydrocarbon and oxygen. Endothermic reactions in the following stages produce hydrogen and carbon monoxide while consuming the remaining hydrocarbon fuel and oxygen in a combination of steam- and dry-reforming processes. In each succeeding stage, the catalytic capability is increased as are the length of the stage and residence time of the reactants.

## Description

### TECHNICAL FIELD

The present invention relates to hydrocarbon reformers for producing hydrogen-rich fuel for fuel cells; more particularly, to such a reformer comprising a plurality of sequential reforming stages; and most particularly, to a staged reformer system supporting both exothermic and endothermic reforming wherein reforming is controlled and limited in sequential stages to prevent thermal degradation of the reformer and provide high-efficiency reforming of the hydrocarbon fuel.

### BACKGROUND OF THE INVENTION

Fuel reformers are well known in the art as devices for converting hydrocarbons to reformate containing hydrogen (H₂) and carbon monoxide (CO) as fuel for fuel cell systems, and especially for solid oxide fuel cell (SOFC) systems. A type of fuel reformer used in such an application provides a series of staged chemical reactions that include a fast exothermic combustion reaction stage coupled with or followed by a slower endothermic fuel reforming stage. The exothermic reactions are self-sustaining, even autocatalytic. The higher the reaction rate, the higher the temperature; and the higher the temperature, the higher the reaction rate. The endothermic reactions, which may include the decomposition of H₂O and CO₂ in the presence of carbon to yield H₂ and CO, are slower and by definition require input of heat.

Typically, when a fuel reformer is coupled to a fuel cell, several modes of reformer operation occur, including:
Reformer ignition and heat-up: During this mode, the reformer receives high temperature combusted gases (1500C to 1700C) for a short period such as, for example, 5 to 15 seconds, to initially heat the reforming substrate to around 500C. Once heated, the flow of high temperature combustion gases is turned off for a short time, for example, 0.5 to 1 second to extinguish the burning gases.
Initial exothermic operation of the reformer: Following extinguishing of the burning gases, fuel to the reformer is turned back on during this mode and the incoming fuel is adjusted to a rich reforming mixture for initial CPOx exothermic reforming in the reformer. At this time, the fuel cell stack is cold, the system combustor is not operating to produce heat and the reformate from the reformer simply passes through the fuel cell stack as does the cold cathode air. During this mode (for example, about 10 seconds) the leading edge of the intake side of the reformer sees relatively high temperatures because of the rich mixture with no recycle.
Transition to endothermic reforming: During this transition mode, the fuel cell stack anode heats up from the warm/hot reforming gases and the system combustor ignites to preheat the cathode air. The heat from the system combustor, now burning on raw reformate coming form the cold stack anode, serves to provide heat to the reformer. At the same time, the reformer receives a portion of pure reformate, as recycle from the cold anode. Throughout the transition period, as the heat input, the amount of recycle, and the composition of the recycle to the reformer are contrantly and controllably varied, a varying degree of temperature gradients is experienced across the reformer. Up until the fuel cell reaches its final operating temperature, (for example, about 10 minutes), the leading edge of the intake side of the reformer gets hot due to the CPOx operation with recycle addition.
Fully endothermic reforming mode: In this mode the fuel cell stack is controlled to operate at a certain desired fuel utilization. To achieve highest reforming efficiency, the amount of air to the reformer is reduced. As a result, the front edge of the reformer becomes relatively cool as compared to its temperature during the transition mode. During the endothermic reforming mode, the amount of molecular oxygen available to the reformer has been reduced so that the temperature of the leading edge of the reformer can only heat the fuel mixture from its initial 150C to about 500C. This temperature is too low for complete endothermic reforming to occur at the leading edge of the reformer resulting in local precipitation of carbon and then coking during further temperature spikes.

Prior art hydrocarbon reformers typically comprise a catalyst bed formed of an inert substrate coated with an active catalytic wash coat. The substrate is typically porous, presenting a large surface area for catalysis. A serious problem for prior art catalyst beds is that intense exothermic catalysis and/or combustion occurs at the leading edge of the bed, during certain exothermic modes of operation, where the concentration of reactants entering the reformer is highest and the dispersal of heat is lowest, causing rapid heat release and heat buildup resulting in unacceptably elevated substrate, washcoat, and catalyst temperatures along the leading edge. Heat is thereby released directly into the catalyst material, the substrate, and the fluid stream. It is believed that temperatures at the beginning of the catalyst bed of a prior art reformer can reach more than 1750°C because of this rapid exothermic release. During sustained use of the reformer, the catalyst bed is progressively eroded, ablated, or otherwise thermally deactivated along the leading edge, resulting in a progressively smaller bed and eventual failure of the reformer. It is difficult to remove heat from the front edges of a prior art catalyst and substrate to control the exothermic reactions, which area dominates but a small part geometrically of a reformer. This leads to a major problem in design, durability, and performance of prior art reformers.

What is needed in the hydrocarbon reforming art is a staged reformer that can support all these modes of operation without either catastrophic failure, reduced durability, or deactivation of reformer operation.

It is a principal object of the present invention to provide high-efficiency, high-throughput, and durable reforming.

### SUMMARY OF THE INVENTION

Briefly described, a hydrocarbon reformer in accordance with the invention comprises a plurality of sequential reforming stages that may or may not be separated by non-reforming mixing spaces therebetween. Each of the stages may reside inside a common housing. The entire reformer is a heat exchange reformer wherein it adds heat to endothermic reactions and removes heat from exothermic reactions, as needed, to prevent carbon build-up, coking and substrate/bed degradation.

The first reforming stage, is arranged to have relatively low catalytic activity, to minimize heat buildup during CPOx exothermic catalysis. This may be achieved by having a relatively short residence time, governed by geometric constraints, and/or relatively low catalytic capability, governed by catalyst loading constraints, such that not all of the fuel and air passing through the first stage is catalyzed, thereby preventing thermal excess in the first stage and consequent bed erosion. Preferably, this stage reacts about one-quarter of the fuel. The fast exothermic combustion reaction near the front edge of the catalyst produces largely water and carbon dioxide, but little hydrogen, while consuming some of the hydrocarbon and oxygen. The endothermic reactions in the subsequent stages reduce hydrogen and carbon monoxide while consuming water, carbon dioxide, and the remaining hydrocarbon fuel and oxygen in a combination of steam- and dry-reforming processes.

In a second stage following the first stage in series, the activity of the catalytic material is increased as are the length of the stage and residence time of the reactants. Preferably, this stage reacts about one-half of the fuel.

The third stage, following the second stage in series, carries a relatively high level of catalytic loading and has a relatively long residence time, which stage reacts the remainder of the fuel.

Preferably, the thermal conductivity of the substrate material increases in each successive stage to conduct excess heat from the first stage exothermic portion (leading edge) of the reformer to the subsequent endothermic portions.

### BRIEF DESCRIPTION OF THE DRAWINGS

The present invention will now be described, by way of example, with reference to the accompanying drawings, in which:
FIG. 1 is a schematic elevational longitudinal cross-sectional view of a prior art single-stage CPOx reformer;
FIG. 2 is a graph showing temperature longitudinally through the prior art single-stage CPOx reformer shown in FIG. 1, when reforming isooctane;
FIG. 3 is a graph like that shown in FIG. 2 when the hydrocarbon fuel is methane;
FIG. 4 is a view like that shown in FIG. 1, showing progressive destruction during use of the leading edge of a prior art catalyst having a metal substrate;
FIG. 5 is a view like that shown in FIG. 4 for a prior art catalyst having a ceramic substrate;
FIG. 6 is a schematic elevational longitudinal cross-sectional view of a two-stage reformer in accordance with the invention;
FIG. 7 is a schematic elevational longitudinal cross-sectional view of a three-stage reformer in accordance with the invention;
FIG. 8 is a schematic drawing showing formation of a first catalytic bed by using a plurality of layered corrugated sheets;
FIG. 9 is a schematic drawing showing formation of a second catalytic bed by alternating corrugated and non-corrugated sheets;
FIG. 10 is a schematic drawing showing the arrangement shown in FIG. 8 rolled into a spiral catalytic bed;
FIG. 11 is a schematic drawing showing the arrangement shown in FIG. 8 folded into a stacked catalytic bed having a cylindrical cross-sectional shape;
FIG. 12 is a schematic elevational longitudinal cross-sectional drawing of a first three-stage reformer in accordance with the invention, showing staged porosity of the catalyst;
FIG. 13 is a schematic elevational longitudinal cross-sectional drawing of a second three-stage reformer in accordance with the invention, showing an increasing number of open catalytic channels;
FIG. 14 is a schematic elevational longitudinal cross-sectional drawing of a third three-stage reformer in accordance with the invention, showing a progressively larger cross-sectional area in discrete stages; and
FIG. 15 is a schematic elevational longitudinal cross-sectional drawing of a fourth three-stage reformer in accordance with the invention, showing a progressively larger cross-sectional area formed by a conic shape.

### DESCRIPTION OF THE PREFERRED EMBODIMENTS

The distinctions and benefits of the present invention may be better appreciated by first considering the elements and limitations of a prior art catalytic reformer.

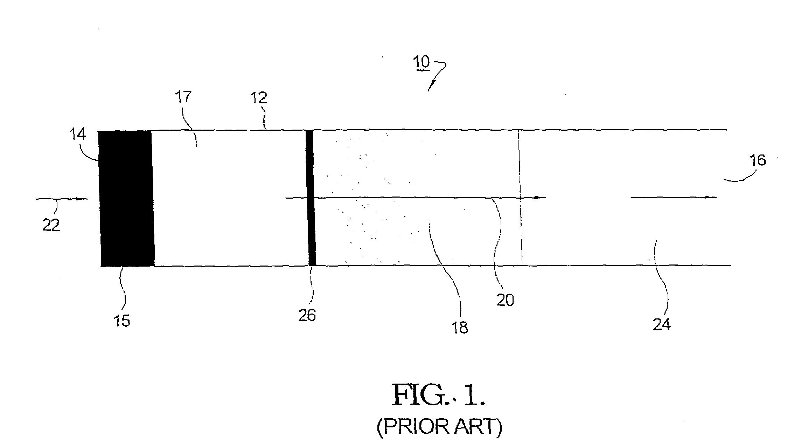

Referring to FIGS. 1 through 5, a prior art hydrocarbon catalytic reformer 10 includes a housing 12 having an inlet 14 and outlet 16. Disposed within housing 12 is a catalyst bed 18 having porosity in at least a longitudinal direction 20. Bed 18 typically includes a durable non-catalytic substrate coated with a washcoat including or supporting catalytic means. The substrate is formed typically of either a metal or a ceramic, as discussed further below. Conventional means for controlling overall temperature, fuel flow rate, air flow rate, and the like are assumed but not shown in FIG. 1.

In operation, a mixture 22 of hydrocarbon and oxygen, typically in the form of air, is introduced into reformer 10 through inlet 14 and thence through a mixture preparation unit 15 and fluid mixing zone 17. The mixture then is passed through catalyst bed 18 wherein the hydrocarbon fuel and air are converted to a reformate 24 comprising a mixture of molecular hydrogen and carbon monoxide.

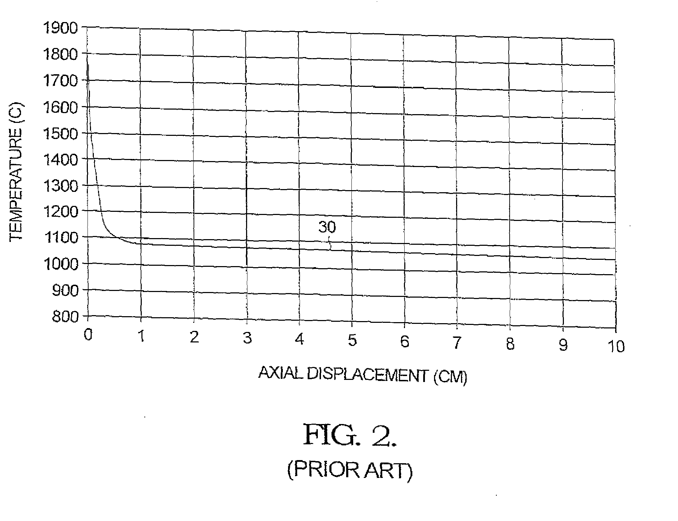

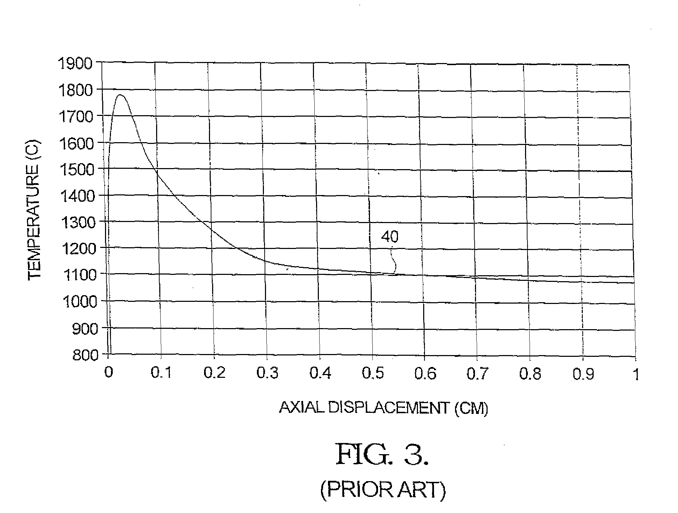

As noted above, a shortcoming of a prior art reformer such as reformer 10 is that the leading edge 26 of catalyst bed 18 becomes severely overheated by intensely exothermic catalytic reaction of the hydrocarbon and oxygen. FIGS. 2 and 3 show the intense onset heating of the catalyst bed for isooctane (FIG. 2, curve 30) and methane (FIG. 3, curve 40) in exothermic mode. A result of this overheating is that the catalyst bed is progressively eroded; further, some of the hydrocarbon is fully oxidized to water and carbon dioxide, which can be recovered as hydrogen and carbon monoxide only through subsequent endothermic reforming farther along in the reformer as described below.

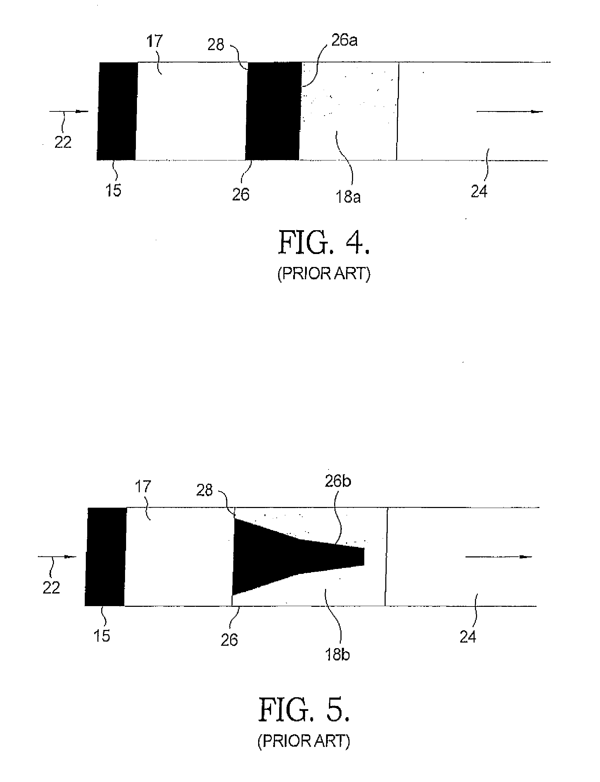

Referring to FIGS. 4 and 5, the impact of catalyst substrate material is shown on a prior art CPOx reformer. The catalyst bed 18a shown in FIG. 4 includes a metal substrate, whereas the catalyst bed 18b shown in FIG. 5 includes a ceramic substrate. Higher temperatures prevail within substrates formed of relatively low-conductivity materials such as ceramics, whereas generally lower temperatures prevail within substrates formed of relatively high-conductivity materials, for example, NiAl alloy or copper. The metal substrate having high conductivity acts to spread out the heat generated by the exothermic CPOx reaction, creating a uniform heat front (shaded area), whereas the ceramic substrate having low conductivity allows the heat front to propagate nonuniformly (shaded area) into the catalyst bed. In either case, the catalyst bed suffers thermal erosion over time of use, resulting in a recession of bed edge 26 to a new bed edge 26a or 26b which continues to recede with continued use of the reformer, leaving a burned-out catalyst zone 28. The over-temperature situation affects a) the catalytic activity of the reforming catalyst due to sintering of the washcoat and subsequent loss of surface area; b) adhesion of the washcoat to the metallic substrate due to thermal stresses; and, c) structural integrity of the substrate as most useful alloys melt in the 1300°C-1500°C temperature range. As the catalyst and substrate are progressively destroyed, the exothermic front at edges 26a,26b moves downstream through the entire catalyst bed, leading to total failure of the reformer.

The only way to prevent such burn-out failure is to provide cooling of the leading edge of the catalyst bed. Active cooling, for example, by circulation of a coolant through the bed, is impractical and also is undesirable because it removes heat from the system which is beneficial in the later endothermic reforming stages and thus reduces the thermal efficiency of the reformer.

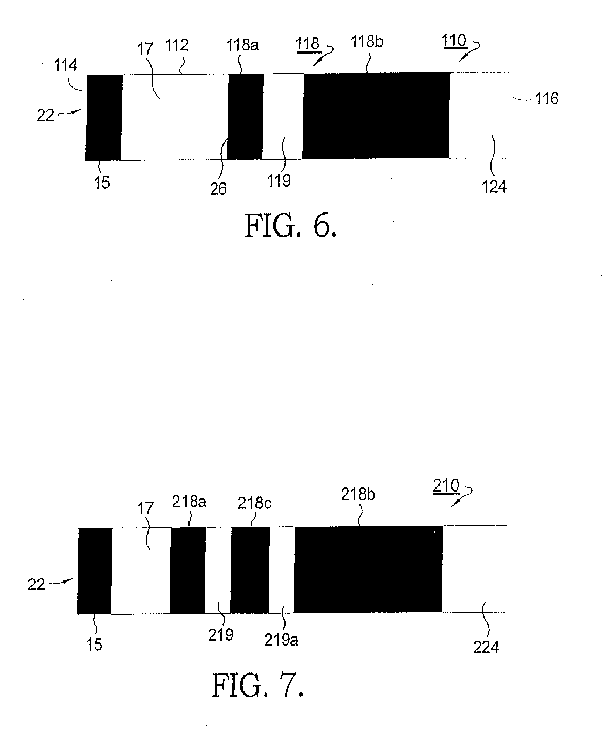

Referring to FIG. 6, an embodiment 110 of an improved hydrocarbon reformer comprises a housing 112 having an inlet 114 and an outlet 116. A catalyst bed 118 is divided into first and last stages 118a,118b, preferably but not necessarily separated by an intermediate chamber 119.

Preferably, first stage 118a comprises a metal catalyst substrate and last stage 118b comprises a ceramic catalyst substrate. The stage 118b substrate is preferably a cast honeycomb ceramic monolith as is well known in the art. Mixture 22 enter first stage 118a having been preheated conventionally to a preferable temperature of up to 500°C to enable lower O/C ratios while retaining resistance to carbon formation. First stage 118a is formed as described below such that coated catalytic and non-catalytic flow channels are interlaced generally in the flow direction. Catalytic reactions occur in only the coated ("hot") catalytic channels, leading to a strong temperature increase in those channels. However, the non-coated ("cold") channels do not promote chemical reaction and thus act as cooling channels in the manner of a heat exchanger such that the fluid temperatures in the hot channels are suppressed below temperatures seen in prior art reformer catalyst beds 18 and the metal substrate temperatures remain well below distress temperatures. Thus it is seen that hot gas, cold channels, and metal temperatures can be controlled by the size and arrangement of the coated and non-coated channels as well as by selective catalytic coating.

The catalytic material coating in the first stage active channels is not as fully loaded with catalyst metal per unit area as a prior art CPOx reformer 10, nor as a last stage 118b as described below, to further suppress catalytic activity in first stage 118a. Preferably, first stage 118a reacts less than one-half of the fuel in mixture 22. A preferred catalytic material for first stage 118a includes Rainey nickel and/or a noble metal, depending upon the fuel. A preferred catalyst carrier is hexa-aluminate or a highly-stabilized alumina, which is desirable for high washcoat surface area and catalyst dispersion stability.

The function of first stage 118a is to carry out sufficient combustion early in the stage (without damaging the catalyst bed) and exothermic reforming to provide a hot mixture of hydrocarbon, H₂O, CO, CO₂, N₂, and H₂ to the latter portions of first stage 118a and last stage 118b wherein a mixture of dry (exothermic) and wet (endothermic) reforming is carried out to produce a reformate 124 comprising ideally only N₂, CO, and H₂.

Gases from the first stage hot and cold channels preferably mix at the end of first stage 118a in intermediate chamber 119. Initial temperatures in last stage 118b are substantially lower than in first stage 118a because much heat has already been removed from the system by endothermic reforming in the latter portions of first stage 118a. Last stage 118b is formed having a plurality of parallel flow channels similar to the structure of first stage 118a, and all the flow channels are coated with noble metal catalyst to endothermically react the remaining hydrocarbon fuel and complete the conversion of water and CO₂ into H₂ and CO. A currently preferred catalyst may include dopants comprising rhodium, platinum, and iridium, and a currently preferred washcoat is a high performing alumina matrix.

Referring to FIG. 7, an embodiment 210 of an improved reformer comprises three stages, including an intermediate stage 218c and another intermediate chamber 219a disposed between first and last stages 218a,218b as shown for embodiment 110 in FIG. 6. Remixing of the reactants and reaction products occurs in second intermediate chamber 219a prior to entry into last stage 218b The catalyst bed is formed of parallel channels as in the first and last stages, and as in the first stage only a portion (preferably one-half) of the flow channels are catalytically active. However, preferably the noble metal loading of the catalytic material is increased over that in first stage 118a to help maintain (by exothermic combustion) the temperatures required for endothermic reforming through the second and third stages, but preferably is less than the noble metal loading in the last stage. Preferably, intermediate stage 218c reacts approximately one-half of the hydrocarbon fuel entered to first stage 218a in mixture 22 to produce reformate 224. A currently preferred catalytic material may be doped with rhodium, iridium, or combination thereof, and a currently preferred washcoat is a stabilized alumina matrix.

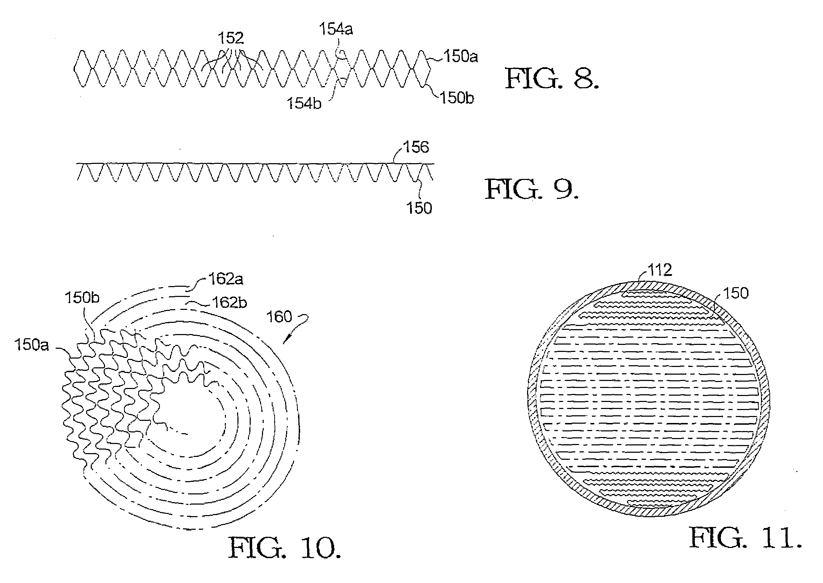

Referring to FIGS. 8 through 11, structures for any or all of first, intermediate, and last stages 218a,218c,218b may be readily formed by configuring metal substrates in any of several configurations, as is well known in the prior art and preferably as disclosed in great structural detail in the incorporated US patent references on total catalytic combustion. One or both surfaces of flat metal sheet stock may be coated to a catalytic washcoat and loaded with the appropriate noble metals. After corrugation, the catalytic stock may be folded or chopped and layered, either with or without non-corrugated stock interleaved, to create the plurality of flow channels described above. Catalytic stages of a reformer in accordance with the invention may be formed by selection of which surfaces to coat, how heavily to load the catalyst with noble metals, and how to corrugate and fold the metal substrates.

FIG. 8 shows end views of two corrugated sheets 150a,150b joined together with their corrugations 180° out of phase to form flow channels 152 therebetween. It will be seen that when both of the opposing surfaces 154a,154b of the sheets are coated with catalyst, the flow channels will be fully active; when only one of the opposing surfaces is coated, the flow channels will be only half-active; and when neither of the opposing surfaces is coated, the flow channels will be catalytically inactive. In addition, as described above, the noble metal loading of the coated catalyst may be varied to further fine-tune the catalytic capabilities of the assembled reformer stage.

Referring to FIG. 10, corrugated sheets 150a,150b are shown rolled into a double-spiral reformer stage 160 wherein the corrugations are generally out of phase. Note that full contact and strict phase relationship between the corrugations is not necessary because each spiral convolution (e.g. 162a) is entirely independent of the other (e.g. 162b). Sheets 150a,150b may also be arranged in a stacked relationship, or a single corrugated sheet 150 may be folded within a housing 112 as shown in FIG. 11 to form any desired cross-sectional shape for reformers 110,210.

Referring to FIG. 9, a reformer may also be configured of alternating corrugated sheets 150 and flat sheets 156, with the same surface coating considerations just described.

In the present invention, several design features enable a fuel reformer to operate with high efficiency over a broad range of operating parameters while maintaining durability and life. In exothermic CPOx mode, the reactor is challenged with a very hot inlet section followed by an adiabatic or endothermic reforming section of medium temperature (ca. 800°C). In full endothermic mode, the reactor is challenged to provide large amounts of heat transfer to sustain the endothermic reactions without the onset of large amounts of carbon, especially in the front section which is designed for high-temperature operation and can become coked if the temperature becomes too low. Thus any or all of three key parameters may be employed to regulate the longitudinal heat profile through an exothermic/endothermic reformer: residence time, chemical kinetics and diffusion effects, and substrate materials.

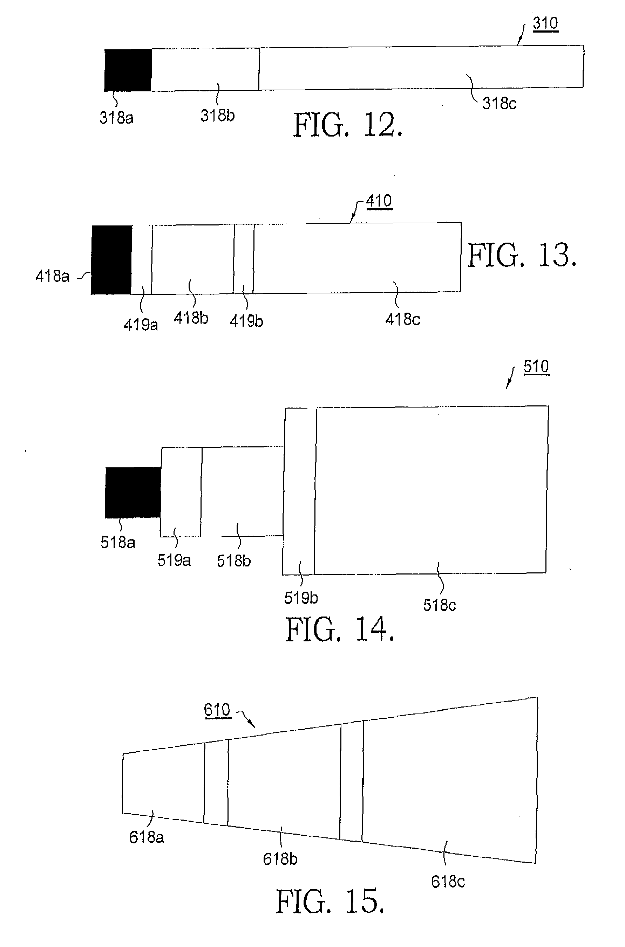

Referring now to FIG. 12, a first embodiment 310 of an improved reformer in accordance with the invention comprises three stages, including a short first stage 318a, a longer intermediate stage 318b, and a long last stage 318c. The catalyst bed is formed of metallic or ceramic open cell foam having progressively decreasing foam density. By decreasing the density of several foam structures within a constant cross-section reforming channel, the residence time may be varied to provide a short residence time early in the reformer during exothermic operation and then longer residence times later in the reformer during endothermic reforming. For example, in first stage 318a, the foam density is about 80 ppi and the operating temperature is about 1000-1100°C; in second stage 318b, the foam density is about 20 ppi and the operating temperature is about 900°C; and in third stage 318c, the foam density is about 5 ppi and the operating temperature is about 800°C. Preferably, intermediate stage 318b reacts approximately one-half of the hydrocarbon fuel entered to first stage 318a.

Referring to FIG. 13, a second embodiment 410 of an improved reformer in accordance with the invention comprises three stages, including a short first stage 418a, a longer intermediate stage 418b, and a long last stage 418c. The catalyst bed is formed of metallic or ceramic open cell foam or monolithic channels. A portion of the potential channels are blocked in first stage 418a, for example one half the channels, such that reactants are accelerated through the remaining open channels and thus the residence time in first stage 418a is short. In second stage 418b, more channels are open, for example three-quarters of all the potential flow channels, such that reactants are significantly slowed and residence time in second stage 418b is increased. In third stage 418c, all flow channels are open, such that reactants are further slowed and residence time is further increased to permit endothermic reforming. Mixing chambers 419a,419b may be included between the stages as desired, as described above for embodiment 210.

Referring to FIG. 14, a third embodiment 510 of an improved reformer in accordance with the invention comprises three stages, including a first stage 518a, an intermediate stage 518b, and a last stage 518c. In this embodiment, the residence time in each sequential reformer stage is increased by increasing the cross-sectional area of the reactant flow path (in this example, the length is also shown as increasing). If the stages are cylindrical, the cross-sectional area increases by the square of the radius; thus, second stage 518b has about twice the cross-sectional area of first stage 518a, and third stage 518c has about twice the cross-sectional area of second stage 518b.

Referring to FIG. 15, a fourth embodiment 610 of an improved reformer in accordance with the invention comprises three stages, including a first stage 618a, an intermediate stage 618b, and a last stage 618c. Embodiment 610 is similar to embodiment 510 except that the reformer shell is conical rather than stepped, so that the increase in cross-sectional area is continuous rather than stepped between stages.

In any of the staged embodiments described above, the thermal profile and rate of reaction through the reformer may be further adjusted by varying the thickness and/or doping level of the catalytic washcoat, as follows.

The lower the temperature, the slower the heterogeneous reaction kinetics of molecules at the surface of the washcoated substrate. The further along the reforming path, the smaller the amount of unreacted fuel and the smaller the amount of reforming agents in the fluid, and therefore, the slower the diffusion of reactants (fuel and reforming agents such as H₂O and CO₂) to the catalytic surface. This means a reduced probability that a fuel and a water molecule will meet at the same time at the right catalytic site to react and form H₂ and CO. In other words, the further downstream within the reactor, the slower the reaction and hence the lower the temperature, and hence the lower the reaction probability because of slower diffusion. These phenomena can be offset, however, by increasing the thickness of washcoat and/or by increased noble metal doping. The level of doping in the first stage can be relatively low because there is high temperature and high diffusion. In fact, it is undesirable to have large amounts of catalyst present in the front end of the reactor because this provides for high exothermic heat release which challenges reactor durability and life. A superior strategy is to dope the washcoat in proportion to the catalytic need, which generally is over the last approximately 80% of the flow path.

The thickness of catalytic washcoat may be varied in a least two methods: first, by assembling a reactor in stages formed of substrate having different washcoat thicknesses; and second, by dipping a first stage only once in a catalytic slurry, a second stage twice, and a third stage three times.

The thermal profile through a catalytic reformer may be further influenced by choice of materials for the catalytic substrate, which can have a large influence on heat transfer within a fuel reforming reactor. Close to the inlet, in the first stage, it is desirable to remove heat rapidly but not simply by external cooling, since retaining the heat within the reformer is useful in promoting endothermic reforming in sequential stages. Thus, the first stage substrate is preferably formed of a material having very high thermal conductivity.

The construction of even the first stage may be tuned to promote longevity and thermal dissipation. For example, a high temperature ceramic substrate may form the entry portion to prevent thermal ablation as is described above. However, such a ceramic entry portion must be relatively short, preferably less than one inch, or otherwise in full endothermic reforming mode the endothermic reactions can lower the temperature in the entry portion to a point at which solid carbon is formed (coking). Further, a third substrate may be disposed between the ceramic entry portion and the high-conductivity portion. Thus, an exemplary structure for a first stage may include an entry portion formed of ceramic or ceramic oxide; a second portion formed of a high-temperature metal, such as Haynes 214, Haynes 230, or Fecralloy; and a third portion formed of a very high conductivity metal such as nickel aluminide or copper. Copper is preferred since its thermal conductivity is 20-30 times greater than that of other appropriate materials (∼400W/mK) and has a melting point of 1080°C, whereas the temperature in this portion of the reactor should never exceed 900°C.

While the present invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A catalytic fuel reformer for reforming hydrocarbon fuel and oxygen into reformate containing hydrogen and carbon monoxide, comprising a plurality of reforming stages, including exothermic and endothermic stages, the stages arranged in flow sequence, each of said stages having a substrate for supporting a catalytic reforming material, and each of said stages having catalytic capability differing from that of the previous stage.

2. A reformer in accordance with Claim 1 wherein said catalytic capability in said first stage is less than said catalytic capability in said last stage.

3. A reformer in accordance with Claim 2 wherein said first stage catalytic material is less heavily doped with noble metals than is said last stage catalytic material.

4. A reformer in accordance with Claim 1 further comprising at least one intermediate reforming stage disposed between said first and last stages.

5. A reformer in accordance with Claim 4 wherein said catalytic material in said intermediate stage is more catalytically active than said catalytic material in said first stage and is less catalytically active than said catalytic material in said last stage.

6. A reformer in accordance with Claim 1 wherein said differing catalytic capability is caused by forming said stages such that a cross-sectional flow area of each stage is greater than that of the immediately previous stage.

7. A reformer in accordance with Claim 1 wherein said differing catalytic capability is caused by forming said stages such that a flow through volume of each stage is greater than that of the immediately previous stage.

8. A reformer in accordance with Claim 1 wherein said differing catalytic capability is caused by forming said stages such that a flow through volume of said reformer increases conically in each stage.

9. A reformer in accordance with Claim 1 wherein said catalytic capability in said first stage and said catalytic capability in said last stage are arranged such that exothermic reforming occurs in said first stage and endothermic reforming occurs in said last stage.

10. A reformer in accordance with Claim 1 wherein the thermal conductivity of said substrate forming each stage is greater than that of the substrate forming the immediately previous stage.

11. A reformer in accordance with Claim 1 wherein said substrate is a metallic foam and wherein the porosity of each stage is less than that of the immediately previous stage.

12. A reformer in accordance with Claim 1 wherein said differing catalytic capability is caused by forming said stages such that the residence time of reactants in each stage is greater than the residence time of reactants in the immediately previous stage.
